# EUROPÄISCHE PATENTSCHRIFT

(11) **EP 2 975 965 B1**
(45) Veröffentlichungstag und Bekanntmachung des Hinweises auf die Patenterteilung: **10.05.2017**
(21) Anmeldenummer: 14719640.6
(22) Anmeldetag: 21.03.2014
(51) Int. Cl.: A45C 5/14, A45C 13/38, A45F 5/02, A45F 3/08

(54) **VORRICHTUNG FÜR TRAGGESTELLE**
DEVICE FOR SUPPORTING FRAMES
DISPOSITIF POUR DES STRUCTURES DE SUPPORT

(30) Priorität: 21.03.2013 AT 2222013
(43) Veröffentlichungstag der Anmeldung: 27.01.2016
(73) Patentinhaber: Tschaikner, Gottfried, 4209 Engerwitzdorf (AT)
(72) Erfinder: Tschaikner, Gottfried, 4209 Engerwitzdorf (AT)
(74) Vertreter: KLIMENT & HENHAPEL
(86) Internationale Anmeldenummer: PCT/EP2014/055717
(87) Internationale Veröffentlichungsnummer: WO 2014/147227

(56) Entgegenhaltungen:
- WO-A1-2004/096621
- DE-A1- 3 040 261
- DE-U1- 29 710 339
- FR-A1- 2 897 037
- US-B2- 7 111 851

## Beschreibung

Die Erfindung betrifft eine Vorrichtung für Traggestelle oder Tragebehälter mit zwei jeweils seitlich des Traggestells oder Tragebehälters angeordneten Rollen oder Räder für einen wahlweise tragenden oder rollenden Transport des Traggestells oder Tragebehälters, wobei die Rollen oder Räder jeweils an einem Fahrwerk befestigt sind, das am Traggestell oder Tragebehälter von einer Tragposition in eine Fahrposition um eine Schwenkachse schwenkbar angeordnet ist, und die zwei jeweils seitlich des Traggestells oder Tragebehälters angeordneten Rollen oder Räder über eine Radachse verbunden sind, die parallel zur Schwenkachse des Fahrwerks verläuft, gemäß dem Oberbegriff von Anspruch 1.

Eine gattungsgemäße Vorrichtung ist aus der FR 2 897 037 A1 bekannt, die eine Vorrichtung für Traggestelle oder Tragebehälter mit drei Rädern beschreibt, von denen die beiden größer ausgebildeten Hinterräder seitlich des Traggestelles oder Tragebehälters angeordnet sind und von einer Tragposition in eine Fahrposition um eine Schwenkachse schwenkbar angeordnet sind. Weitere Vorrichtungen für Traggestelle oder Tragebehälter wurden in der EP 1 475 293 A1, EP 2 248 707 A1, US 4,429,897 A, DE 30 40 261 A1 und der WO 2005/049403 A1 beschrieben.

Aus dem Stand der Technik sind ferner Traggestelle bzw. Tragebehälter für einen wahlweise tragenden oder rollenden Transport als sogenannte "Trolleys" bekannt, die an der Unterseite des Traggestells oder Tragebehälters mit kleinen Rädern oder Rollen versehen sind, und mittig mit einer ausziehbaren Griffstange ausgestattet sind. Die Last kann somit auf dem Rücken getragen oder behelfsmäßig gezogen werden. In Fahrposition hat diese Art von "Trolley" konstruktionsbedingt mehrere Nachteile. So erlaubt etwa der geringe Durchmesser der Räder oder Rollen nur ein Fahren auf sehr glatten Böden wie auf Flughäfen und Bahnhöfen. Des Weiteren weisen bekannte "Trolleys" schlechte Fahreigenschaften während des rollenden Transports auf, insbesondere neigen sie leicht zum Kippen. Durch die Positionierung der Räder oder Rollen am unteren Ende des "Trolley" müssen in Fahrposition bei ausgezogener Griffstange außerdem immer noch ca. 30% des Gesamtgewichts des "Trolley" vom Benützer getragen werden.

In der DE 297 10 339 U ist ein zerlegbarer Handkarren beschrieben, auf den ein Rucksack mit der Vorderseite aufliegend befestigt werden kann, wobei die Rückseite mit der Tragegurte frei bleibt. Die Laufräder werden beim Tragen nach unten geklappt. Die Konstruktion weist ebenfalls mehrere Nachteile auf. So ist etwa der Rucksack am Handkarren mit seiner Vorderseite aufliegend zu befestigen, sodass ein Be- und Entladen des Rucksacks nur im demontierten Zustand möglich ist. Des Weiteren ist der Abstand der Räder zueinander deutlich kleiner als die Höhe des Rucksacks, was insbesondere beim Fahren auf unebenem Boden zu einer instabilen Fahrweise führt. Auch eine Positionierung des Schwerpunkts des Rucksacks vertikal über dem Achspunkt der Räder, was ein weitgehend lastfreies Fahren ermöglicht, wird in der Regel nicht zu bewerkstelligen sein.

In der US 711 18 51B ist ein Handwagen beschrieben, und in der WO 04 096 621 A ein mittels eines Hüftgurts gezogener Wagen zum Transport von Lasten, die beide ein Zusammenschieben bzw. ein Zusammenklappen der Konstruktion zum besseren Verstauen derselben ermöglichen. Die Wagen sind aber jeweils als Handwagen mit einer Deichsel konzipiert und nicht zum Tragen von Lasten auf dem Rücken geeignet. Des Weiteren sind die Räder am unteren Ende der Konstruktion angebracht. Ein Teil der Last muss somit vom Benutzer am Deichselende getragen werden, sodass ein lastfreies Fahren somit nur sehr begrenzt möglich ist.

Das Ziel der Erfindung besteht somit darin, eine Vorrichtung für Traggestelle oder Tragebehälter zu verwirklichen, die nicht nur einen raschen und bequemen Umbau von der Tragposition in eine Fahrposition erlaubt, sondern die auch für eine Benutzung auf unebenem Untergrund geeignet ist.

Diese Ziele werden durch die Merkmale von Anspruch 1 erreicht. Anspruch 1 bezieht sich auf eine Vorrichtung für Traggestelle oder Tragebehälter mit zwei jeweils seitlich des Traggestells oder Tragebehälters angeordneten Rollen oder Räder für einen wahlweise tragenden oder rollenden Transport des Traggestells oder Tragebehälters, wobei die Rollen oder Räder jeweils an einem Fahrwerk befestigt sind, das am Traggestell oder Tragebehälter von einer Tragposition in eine Fahrposition um eine Schwenkachse schwenkbar angeordnet ist, und die zwei jeweils seitlich des Traggestells oder Tragebehälters angeordneten Rollen oder Räder über eine Radachse verbunden sind, die parallel zur Schwenkachse des Fahrwerks verläuft, bei der erfindungsgemäß vorgesehen ist, dass der Radabstand in Richtung der Radachse der zwei seitlich angeordneten Rollen oder Räder in der Fahrposition größer als in der Tragposition ist. Die Anordnung der Räder oder Rollen an einem schwenkbaren Fahrwerk ermöglicht nicht nur eine für den Transport am Rücken bequeme Lagerung der Räder bzw. Rollen, sondern auch einen raschen Umbau, wie noch näher ausgeführt werden wird. Ein rascher Umbau von der Tragposition in die Fahrposition ist deshalb wichtig, weil erfahrungsgemäß lange Umbauzeiten davon abhalten, die Umbaumöglichkeit von Trag- in Fahrpositionen in der Praxis auch tatsächlich zu nutzen. Des Weiteren ist erfindungsgemäß vorgesehen, dass der Radabstand der zwei seitlich angeordneten Rollen oder Räder in der Fahrposition größer als in der Tragposition ist. Dieses Merkmal ermöglicht gute Fahreigenschaften insbesondere auf unebenem Untergrund. Es zeigt sich nämlich, dass die schlechte Benutzbarkeit von Traggestellen oder Tragebehältern für den rollenden Transport auf unebenem Untergrund insbesondere durch die hohe seitliche Kippgefahr verursacht wird.

Diese Kippgefahr wird erfindungsgemäß dadurch verringert, dass der Radabstand für die Fahrposition vergrößert werden kann. Insbesondere kann der Radabstand der seitlich angeordneten Räder bzw. Rollen auch so vergrößert werden, dass er die Breite des Traggestells oder Tragebehälters in der Fahrposition überschreitet. Auch bei geringfügiger, seitlicher Schräglage verbleibt somit der Schwerpunkt des Traggestells oder Tragebehälters in seiner vertikalen Projektion innerhalb des Radabstandes, sodass ein seitliches Umkippen erschwert und bessere Fahreigenschaften erreicht werden.

Vorzugsweise kann die Radachse in der Tragposition im Bereich einer Vorderseite des Traggestells oder Tragebehälters gelagert sein, und in der Fahrposition im Bereich einer Rückseite des Traggestells oder Tragebehälters, wobei die Radachse im Zuge der Schwenkbewegung des Fahrwerks von der Tragposition in die Fahrposition um eine Unterseite des Traggestells oder Tragebehälters schwenkt. Die Rückseite des Traggestells oder Tragebehälters ist dabei jene Seite, die in der Tragposition in Anlage mit dem Rücken des Trägers steht. Beim tragenden Transport sind somit die Räder oder Rollen vom Rücken abgewandt auf der Vorderseite gelagert. Für einen Umbau in die Fahrposition ist das Traggestell bzw. der Tragebehälter lediglich auf dem Boden abzustellen und bei Fixierung der Radachse etwa mit dem Fuß über die Radachse zu heben. Dieser Umbau ist somit rasch und ohne große Kraftanstrengung zu bewerkstelligen.

Der praktische Einsatz und der Umbau von der Tragposition in die Fahrposition wird erleichtert, indem das Fahrwerk mit dem Traggestell oder Tragebehälter über ein, mit einer Totpunktfeder versehenes Gelenk verbunden ist. Die Tragposition und die Fahrposition stellen dabei Gleichgewichtslagen dar, in denen das Fahrwerk stabil verharrt. Bei einem Umbau etwa von der Tragposition in die Fahrposition ist lediglich die Totpunktlage der Totpunktfeder zu überwinden, und das Fahrwerk nimmt in weiterer Folge selbsttätig die Gleichgewichtslage der Fahrposition ein.

Zur Vergrößerung des Radabstandes kann etwa vorgesehen sein, dass ein mit der Schwenkbewegung des Fahrwerks von der Tragposition in die Fahrposition gekoppelter Radachsenauszug vorgesehen ist, der den Radabstand im Zuge der Schwenkbewegung des Fahrwerks von der Tragposition in die Fahrposition in eine zur Schwenkachse parallelen Auszugsrichtung vergrößert. Die Schwenkbewegung und die Vergrößerung des Radabstandes erfolgen somit gleichzeitig im selben Bewegungsvorgang, wodurch der Umbau noch rascher bewerkstelligt werden kann. Gemäß einer Ausführungsform wird etwa vorgeschlagen, dass der Radachsenauszug ein abstandsverringerndes Rückstellelement umfasst, sowie einen abstandsvergrößernden Seilzug, der im Zuge der Schwenkbewegung des Fahrwerks von der Tragposition in die Fahrposition über eine Spannscheibe geführt ist. Der Seilzug wird somit im Zuge der Schwenkbewegung des Fahrwerks von der Tragposition in die Fahrposition verkürzt, wodurch eine Ausschubbewegung des jeweiligen Rades bewirkt werden kann. Im Zuge der Schwenkbewegung des Fahrwerks von der Fahrposition in die Tragposition wird der Seilzug hingegen wieder verlängert, und das Rückstellelement stellt den ursprünglichen, kleineren Radabstand wieder her. Der Radachsenauszug kann dabei an einem oder vorzugsweise auch an beiden Rädern bzw. Rollen vorgesehen sein, um eine symmetrische Anordnung der Räder bzw. Rollen bezüglich des Schwerpunktes des Traggestells oder Tragebehälters sicher zu stellen.

Die Erfindung wird in weiterer Folge anhand eines Ausführungsbeispiels mithilfe der beiliegenden Figuren näher erläutert. Es zeigen dabei die
Fig. 1 eine Ausführungsform der erfindungsgemäßen Vorrichtung in Tragposition,
Fig. 2 eine Ausführungsform der erfindungsgemäßen Vorrichtung in Fahrposition,
Fig. 3 eine Darstellung der erfindungsgemäßen Vorrichtung zur Erläuterung des Umschwenkens des Fahrwerks von der Tragposition in die Fahrposition bei gleichzeitigem Auszug der Radachse,
Fig. 4 eine vergrößerte Darstellung zur Erläuterung einer Ausführungsform des Radachsenauszugs, und die
Fig. 5 eine Ausführungsform der erfindungsgemäßen Vorrichtung in Fahrposition mit Hüftgurt.

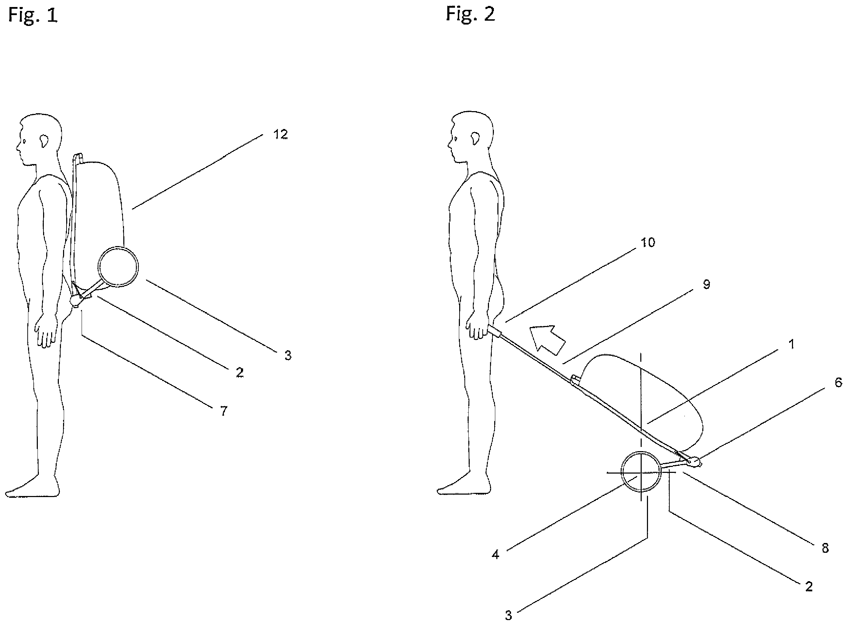

In der Fig. 1 und Fig. 2 ist eine Ausführungsform der Erfindung für ein Traggestell 1 oder Tragebehälter 12 gezeigt, an dessen Unterseite ein um zwei horizontal liegende Drehpunkte schwenkbares Fahrwerk 2 angeordnet ist. Die beiden Drehpunkte definieren eine Schwenkachse 6 des Fahrwerks 2. Das Fahrwerk 2 kann zwischen einer Tragposition 7 (Fig. 1) und einer Fahrposition 8 (Fig. 2) geschwenkt werden. In der Tragposition 7 liegt das Fahrwerk 2 an einer Vorderseite des Traggestells 1 an. Die Räder 3 befinden sich dabei jeweils seitlich am Traggestell 1 anliegend. Obwohl das Fahren auf unebenem Gelände Räder 3 mit vergleichsweise großem Durchmesser erfordert, finden in dieser Position größere Räder 3 Platz, ohne den Benutzer beim Tragen des Traggestells 1 zu behindern.

Die Fig.2 zeigt die erfindungsgemäße Vorrichtung nach Umschwenken des Fahrwerks 2 in die Fahrposition 8. Der Schwerpunkt der Last liegt dabei weitgehend vertikal über der Radachse 4 des Fahrwerks 2, wie in der Fig. 2 anhand der vertikalen Hilfslinie angedeutet ist. Eine Feinjustierung der Lastverteilung auf die Radachse 4 kann durch die gewählte Länge des Auszugs der Griffstange 9 erfolgen. Dies ermöglicht ein weitgehend lastfreies Fahren. Der Benutzer muss beim Ziehen des Traggestells 1 bzw. Tragebehälters 12 im Wesentlichen nur den Rollwiderstand der Räder 3 überwinden.

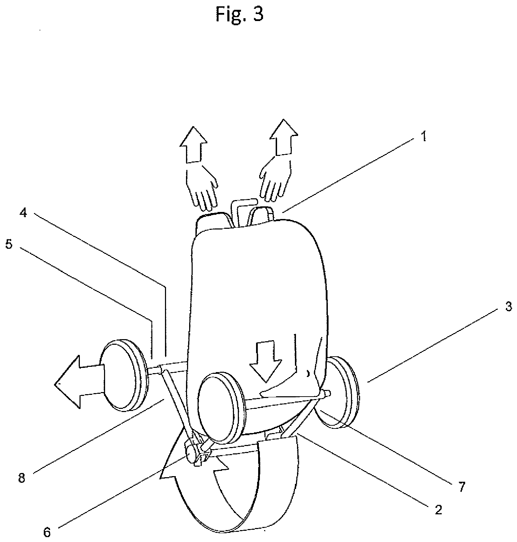

Die Fig.3 zeigt das Umschwenken des Fahrwerks 2 zwischen der Tragposition 7 und der Fahrposition 8. Zeitgleich wird der Radabstand entlang der Radachse 4 durch einen Radachsenauszug 5 in der eingezeichneten Pfeilrichtung vergrößert, die in Richtung der Radachse 4 und somit parallel zur Schwenkachse 6 verläuft. Beim umgekehrten Vorgang wird der Radabstand entlang der Radachse 4 wieder verringert. Die Erweiterung des Radabstandes reduziert die Kippgefahr beim rollenden Transport des Traggestells 1 bzw. Tragebehälters 12 insbesondere auf unebenem Gelände.

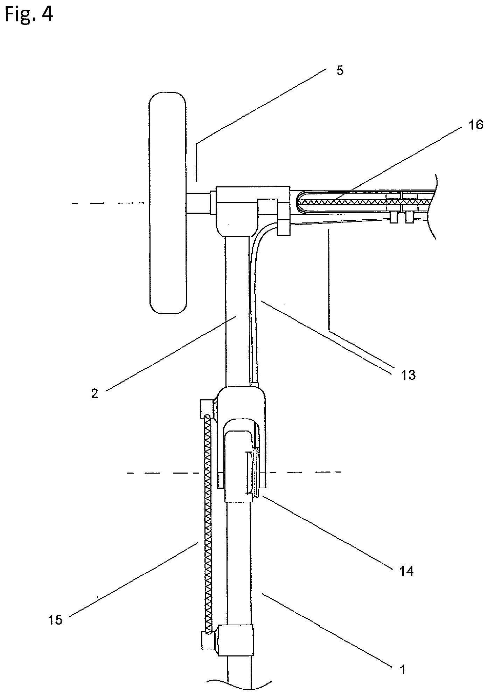

Für einen raschen Umbau von der Tragposition 7 in die Fahrposition 8 sind die beiden, jeweils seitlich des Traggestells 1 oder Tragebehälters 12 angeordneten Rollen oder Räder 3 über eine Radachse 4 verbunden, die parallel zur Schwenkachse 6 des Fahrwerks 2 verläuft. Die gemeinsame Radachse 4 erlaubt etwa eine fußbetätigte Bedienung des Fahrwerks 2 der beiden seitlichen Räder 3, wie in der Fig. 3 angedeutet ist, sodass die Schwenkbewegung einfach bewerkstelligt werden kann. Für einen Umbau in die Fahrposition 8 ist das Traggestell 1 bzw. der Tragebehälter 12 lediglich auf dem Boden abzustellen und bei Fixierung der Radachse 4 etwa mit dem Fuß über die Radachse 4 zu heben. Dieser Umbau ist somit rasch und ohne große Kraftanstrengung zu bewerkstelligen. Das Fahrwerk 2 ist dabei mit dem Traggestell 1 oder Tragebehälter 12 über ein, mit einer Totpunktfeder 15 versehenes Gelenk (siehe auch Fig. 4) verbunden. Die Tragposition 7 und die Fahrposition 8 stellen dabei Gleichgewichtslagen dar, in denen das Fahrwerk 2 stabil verharrt. Bei einem Umbau etwa von der Tragposition 7 in die Fahrposition 8 ist lediglich die Totpunktlage der Totpunktfeder 15 zu überwinden, und das Fahrwerk 2 nimmt in weiterer Folge selbsttätig die Gleichgewichtslage in der Fahrposition 8 ein.

Die Fig.4 zeigt eine vorzugsweise Ausgestaltung des Radachsenauszugs 5 mittels eines Seilzugs 13. Durch das Umschwenken des Fahrwerks 2 wird der Seilzug 13, der über die festsitzende Spannscheibe 14 geführt ist, angezogen. Der mit dem Seilzug 13 versehene Radachsenauszug 5 wird dabei entgegen der rückstellenden Kraft des Rückstellelements 16 gemeinsam mit dem entsprechenden Rad 3 nach außen gedrückt (in Bezug auf die Fig. 4 nach links). Beim umgekehrten Vorgang wird mittels des Rückstellelements 16 des Radachsenauszuges 5 das Rad 3 wieder in die Ausgangsposition gebracht. Die Totpunktfeder 15 spannt das Fahrwerk 2 in die jeweiligen Endpositionen und bewirkt beim Umschwenken des Fahrwerks 2 ein Umspringen in die jeweilige Gegenposition.

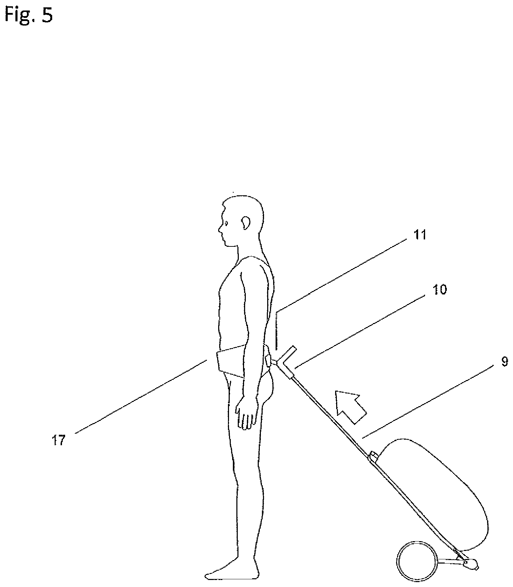

Die Fig.5 zeigt das Ziehen des Traggestells 1 bzw. Tragebehälters 12 mittels Hüftgurt 17. Der an der ausziehbaren Griffstange 9 befestigte Handgriff 10 ist hierfür mit einer Kopplung 11 ausgestattet. Diese ermöglicht eine Befestigung an dem vom Benutzer getragenen Hüftgurt 17. Die Hände des Benutzers bleiben beim Ziehen des Traggestells 1 bzw. Tragebehälters 12 somit frei. Mithilfe der Kopplung 11 kann das Traggestell 1 bzw. der Tragebehälter 12 auch an einem Fahrrad und dergleichen montiert werden. Das Traggestell 1 bzw. der Tragebehälter 12 wird in Fahrposition somit zum Fahrradanhänger. Vorzugsweise Rucksäcke können so zum Ausgangspunkt von Wanderungen mit dem Fahrrad transportiert werden, oder beim Einkaufen mit dem Fahrrad als Einkaufwagen dienen.

### Bezugszeichenliste:

- 1: Traggestell
- 2: Fahrwerk
- 3: Räder
- 4: Radachse
- 5: Radachsenauszug
- 6: Schwenkachse
- 7: Tragposition
- 8: Fahrposition
- 9: Griffstange
- 10: Handgriff
- 11: Kopplung
- 12: Tragebehältnis
- 13: Seilzug
- 14: Spannscheibe
- 15: Totpunktfeder
- 16: Rückstellelement
- 17: Hüftgurt

## Patentansprüche

1. Vorrichtung für Traggestelle (1) oder Tragebehälter (12) mit zwei, jeweils seitlich des Traggestells (1) oder Tragebehälters (12) angeordneten Rollen oder Räder (3) für einen wahlweise tragenden oder rollenden Transport des Traggestells (1) oder Tragebehälters (12), wobei die Rollen oder Räder (3) jeweils an einem Fahrwerk (2) befestigt sind, das am Traggestell (1) oder Tragebehälter (12) von einer Tragposition (7) in eine Fahrposition (8) um eine Schwenkachse (6) schwenkbar angeordnet ist, und die zwei, jeweils seitlich des Traggestells (1) oder Tragebehälters (12) angeordneten Rollen oder Räder (3) über eine Radachse (4) verbunden sind, die parallel zur Schwenkachse (6) des Fahrwerks (2) verläuft, **dadurch gekennzeichnet, dass** der Radabstand in Richtung der Radachse (4) der zwei seitlich angeordneten Rollen oder Räder (3) in der Fahrposition (8) größer als in der Tragposition (7) ist.

2. Vorrichtung nach Anspruch 1, **dadurch gekennzeichnet, dass** die Radachse (4) in der Tragposition (7) im Bereich einer Vorderseite des Traggestells (1) oder Tragebehälters (12) gelagert ist, und in der Fahrposition (8) im Bereich einer Rückseite des Traggestells (1) oder Tragebehälters (12), wobei die Radachse (4) im Zuge der Schwenkbewegung des Fahrwerks (2) von der Tragposition (7) in die Fahrposition (8) um eine Unterseite des Traggestells (1) oder Tragebehälters (12) schwenkt.

3. Vorrichtung nach Anspruch 1 oder 2, **dadurch gekennzeichnet, dass** das Fahrwerk (2) mit dem Traggestell (1) oder Tragebehälter (12) über ein, mit einer Totpunktfeder (15) versehenes Gelenk verbunden ist.

4. Vorrichtung nach einem der Ansprüche 1 bis 3, **dadurch gekennzeichnet, dass** ein mit der Schwenkbewegung des Fahrwerks (2) von der Tragposition (7) in die Fahrposition (8) gekoppelter Radachsenauszug (5) vorgesehen ist, der den Radabstand in Richtung der Radachse (4) im Zuge der Schwenkbewegung des Fahrwerks (2) von der Tragposition (7) in die Fahrposition (8) in eine zur Schwenkachse (6) parallelen Auszugsrichtung vergrößert.

5. Vorrichtung nach Anspruch 4, **dadurch gekennzeichnet, dass** der Radachsenauszug (5) ein abstandsverringerndes Rückstellelement (16) umfasst, sowie einen abstandsvergrößernden Seilzug (13), der im Zuge der Schwenkbewegung des Fahrwerks (2) von der Tragposition (7) in die Fahrposition (8) über eine Spannscheibe (14) geführt ist.

## Claims

1. An apparatus for carrying frames (1) or carrying containers (12), comprising two rollers or wheels (3), respectively arranged to the sides of the carrying frame (1) or carrying container (12), for a selectively carrying or rolling transport of the carrying frame (1) or carrying container (12), wherein the rollers or wheels (3) are respectively fastened to a chassis (2), which is pivotably arranged on the carrying frame (1) or carrying container (12) about a pivot axis (6) from a carrying position (7) to a rolling position (8), and the two rollers or wheels (3), which are respectively arranged to the side of the carrying frame (1) or carrying container (12), are connected to each other via a wheel axle (4) which extends parallel to the pivot axis (6) of the chassis (2), **characterized in that** the wheel distance in the direction of the wheel axle (4) of the two rollers or wheels (3) arranged at the sides is greater in the rolling position (8) than in the carrying position (7).

2. An apparatus according to claim 1, **characterized in that** the wheel axle (4) is mounted in the carrying position (7) in the region of a front side of the carrying frame (1) or carrying container (12), and in the rolling position (8) in the region of a rear side of the carrying frame (1) or carrying container (12), wherein the wheel axle (4), in the course of the pivoting movement of the chassis (2) from the carrying position (7) to the rolling position (8), pivots about a bottom side of the carrying frame (1) or carrying container (12).

3. An apparatus according to claim 1 or 2, **characterized in that** the chassis (2) is connected to the carrying frame (1) or carrying container (12) via a joint provided with a dead centre spring (15).

4. An apparatus according to one of the claims 1 to 3, **characterized in that** a wheel axle pull-out (5) is provided, which is coupled to the pivoting movement of the chassis (2) from the carrying position (7) to the rolling position (8), and which increases the wheel distance in the direction of the wheel axle (4) in the course of the pivoting movement of the chassis (2) from the carrying position (7) to the rolling position (8) in a pull-out direction parallel to the pivot axis (6).

5. An apparatus according to claim 4, **characterized in that** the wheel axle pull-out (5) comprises a restoring element (16) which decreases the distance, as well as a cable pull (13) which increases the distance and which is guided via a load washer (14) in the course of the pivoting movement of the chassis (2) from the carrying position (7) to the rolling position (8) .

## Revendications

1. Dispositif pour des bâtis de transport (1) ou des récipients de transport (12) avec deux galets ou deux roues (3) disposés de chaque côté du bâti de transport (1) ou du récipient de transport (12) pour un transport porté ou roulant, au choix, du bâti de transport (1) ou du récipient de transport (12), dans lequel les galets ou les roues (3) sont fixés chacun à un châssis (2) qui est disposé sur le bâti de transport (1) ou le récipient de transport (12) de façon à pouvoir pivoter autour d'un axe de pivotement (6) d'une position portée (7) à une position de roulement (8) et les deux galets ou roues (3) disposés de chaque côté du bâti de transport (1) ou du récipient de transport (12) sont reliés par un axe de roues (4) parallèle à l'axe de pivotement (6) du châssis (2), **caractérisé en ce que** l'écartement des roues dans la direction de l'axe des roues (4) des deux galets ou roues (3) disposés latéralement est plus grand dans la position de roulement (8) que dans la position portée (7).

2. Dispositif selon la revendications 1, **caractérisé en ce que** l'axe des roues (4) s'appuie au niveau d'une face avant du bâti de transport (1) ou du récipient de transport (12) dans la position portée (7) et au niveau d'une face arrière du bâti de transport (1) ou du récipient de transport (12) dans la position de roulement (8), l'axe des roues (4) pivotant autour d'une face inférieure du bâti de transport (1) ou du récipient de transport (12) pendant le du mouvement pivotant du châssis (2) de la position portée (7) à la position de roulement (8).

3. Dispositif selon la revendication 1 ou 2, **caractérisé en ce que** le châssis (2) est relié au bâti de transport (1) ou au récipient de transport (12) par une articulation munie d'un ressort de point mort (15).

4. Dispositif selon l'une des revendications 1 à 3, **caractérisé en ce qu'**il est prévu une extension de l'axe des roues (5) couplée avec le mouvement pivotant du châssis (2) de la position portée (7) à la position de roulement (8), qui augmente l'écartement des roues dans la direction de l'axe des roues (4) pendant le mouvement pivotant du châssis (2) de la position portée (7) à la position de roulement (8) dans une direction d'extension parallèle à l'axe de pivotement (6).

5. Dispositif selon la revendications 4, **caractérisé en ce que** l'extension de l'axe des roues (5) comprend un élément de rappel (16) qui réduit l'écartement ainsi qu'un câble de traction (13) qui augmente l'écartement et qui est guidé par-dessus un disque tendeur (14) pendant le mouvement pivotant du châssis (2) de la position portée (7) à la position de roulement (8).
